# EUROPEAN PATENT SPECIFICATION

(11) **EP 2 836 458 B1**
(45) Date of publication and mention of the grant of the patent: **13.03.2019**
(21) Application number: 13716772.2
(22) Date of filing: 11.04.2013
(51) Int. Cl.: C01B 13/02, A61L 2/00, B65D 81/26

(54) **OXYGEN-RELEASING INSERTS**
SAUERSTOFFFREISETZENDE EINSÄTZE
INSERTS DE LIBÉRATION D'OXYGÈNE

(30) Priority: 13.04.2012 EP 12164177
(43) Date of publication of application: 18.02.2015
(73) Proprietor: JT International SA, 1202 Geneva (CH)
(72) Inventor: MCFARLANE, Mary, Limavady County Londonderry BT49 0QS (GB); PARSONS, Rory, Belfast BT5 6NA (GB)
(74) Representative: Gill Jennings & Every LLP
(86) International application number: PCT/EP2013/057627
(87) International publication number: WO 2013/153178

(56) References cited:
- WO-A1-90/11248
- WO-A1-2008/095240
- GB-A- 2 450 860
- US-A- 5 799 495
- US-A1- 2003 189 187

## Description

### Field of the Invention

The present invention relates to oxygen-releasing inserts for maintaining the internal environment within a sealed or re-sealable package to prevent deterioration of the packaged product.

### Background to the Invention

Active and intelligent packaging, including inserts with tailored emission or absorption capabilities, is a rapidly growing and important area within the packaging industry (Robertson, G. L. (2006) Food Packaging. Principles and Practice (2nd Edition); CRC Press). Inserts capable of absorbing oxygen, ethylene, moisture and odours have all been made, as have inserts capable of releasing carbon dioxide, preservative and ethanol. An early example of such technology is the "Ageless™" oxygen-scavenger inserts developed by Mitsubishi Gas Chemical Company in 1977.

Oxygen-releasing active inserts are available from EMCO Fresh Technologies Ltd. Their GB Patent No. 2450860 describes an insert for preserving packed foods by controlling the gaseous composition within the packaging. The inserts described in this patent publication contain sodium carbonate peroxyhydrate (Na₂CO₃.1.5(H₂O₂)); also known as sodium percarbonate) as the oxygen source. They may also contain zeolite or bentonite clays, which act as drying agents, as well as sodium chloride, sodium carbonate, calcium peroxide or sodium perborate. The functionality of these inserts is based upon: (1) the activation of the percarbonate by moisture; (2) control of moisture levels within the insert by the drying agent; and (3) the water permeability of the containment material. The function of the active insert described in GB 2450860 is illustrated schematically in Figure 1.

WO 90/11248 relates to the controlled release of O₂ or CO₂ through the controlled reaction of a precursor compound, such as hydrogen peroxide or urea peroxide, for healthcare and industrial uses, including during the storage and transportation offish.

However, the prior art inserts are not suitable for use with all types of perishable packaged products, and they have been found to release their available oxygen too readily, which has a potential negative effect on the pH, oxidative aromas and pack integrity of certain packaged products such as tobacco. As such, there is a need for improved active inserts capable of maintaining oxygen levels within pre-determined values in order to maintain the characteristics of packaged products, thereby preventing deterioration and extending shelf-life.

Furthermore, existing inserts are typically provided as sachets or bags, with one or two materials sealed together. Manufacturers can use magnets to hold a ferrous powder in place until sealing of pouch is complete, however this method is only applicable to a small subset of ingredients used for oxygen-absorbing inserts.

The contents of existing inserts are often heterogeneous powders, which are difficult to arrange/form during the filling process. As a result, there is generally high variability in the sachets. In particular, the powders are often piled on the bottom layer before the top layer is applied and particles can get into the sealing region and weaken the seal leading to loss/leakage. Therefore there is a need for improvements in the format of the contents of oxygen-releasing inserts to aid of manufacture of high quality inserts.

### Summary of the Invention

A first aspect of the invention provides an oxygen-releasing insert for actively controlling the internal environment within a package to maintain a pre-determined gaseous as defined in claim 1.

A second aspect of the invention provides a packaging system containing a perishable product and an oxygen-releasing insert according to the first aspect of the invention.

### Description of the Drawings

Figure 1 is a schematic illustration of the function of the active insert described in GB2450860;
Figure 2 is a graph showing that the pH stability of snus improves in high (100%) CO₂ conditions compared with atmospheric air conditions;
Figure 3 is a representation of the equilibrium of disassociation for hydrogen peroxide adducts in the presence of drying agents; and
Figure 4 shows the oxygen analysis for each active insert test sample.

### Detailed Description of the Invention

The present invention provides an oxygen-releasing insert, which is suitable for actively controlling the internal environment within a sealed or re-sealable package to maintain a pre-determined gaseous composition. The insert comprises urea hydrogen peroxide (UHP) contained within a sealed wrapper fabricated from a composite material having a high moisture barrier and low gas barrier.

UHP, also known as carbamide peroxide or percarbamide and having the chemical formula CH₆N₂O₃, is an oxidising agent and adduct of hydrogen peroxide and urea. At room temperature UHP is a white crystalline solid which dissolves in water to release free hydrogen peroxide.

The oxygen-producing inserts disclosed in GB2450860 contain sodium percarbonate as the oxidant. The present inventors have found that UHP is a suitable alternative oxidant to sodium percarbonate in oxygen-releasing inserts; the available oxygen of UHP in its most common form is 16%, and the available oxygen of sodium percarbonate is commonly around 13%, so 1g of each provides a very similar quantity of oxygen. However, UHP is advantageous because it is easily formulated into a tablet. This enable ease of handling and manufacture of UHP-containing inserts.

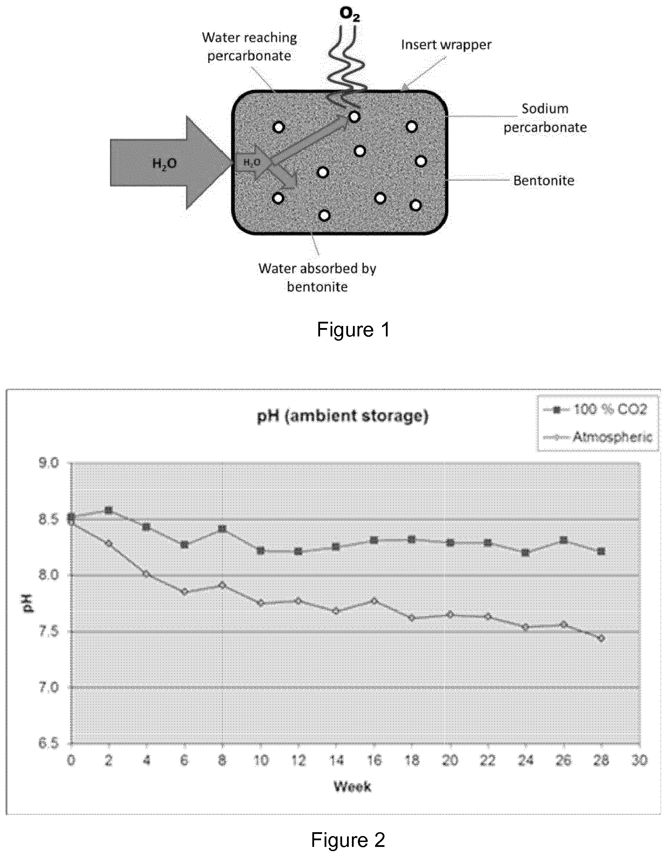

Furthermore, it has been found that UHP allows packing under elevated carbon dioxide levels, which can improve pH stability compared with inserts comprising sodium percarbonate as the oxidant. As shown in Figure 2, packing snus in a sealed pack under 100% CO₂ provides improved pH stability compared to packing under air in a sealed pack. Unlike the sodium percarbonate-containing inserts of the prior art, UHP in the insert of the present invention does not absorb CO₂. Therefore, the composition of inserts according to the present invention means that they can be packed in elevated carbon dioxide conditions in order to improve pH stability of the product.

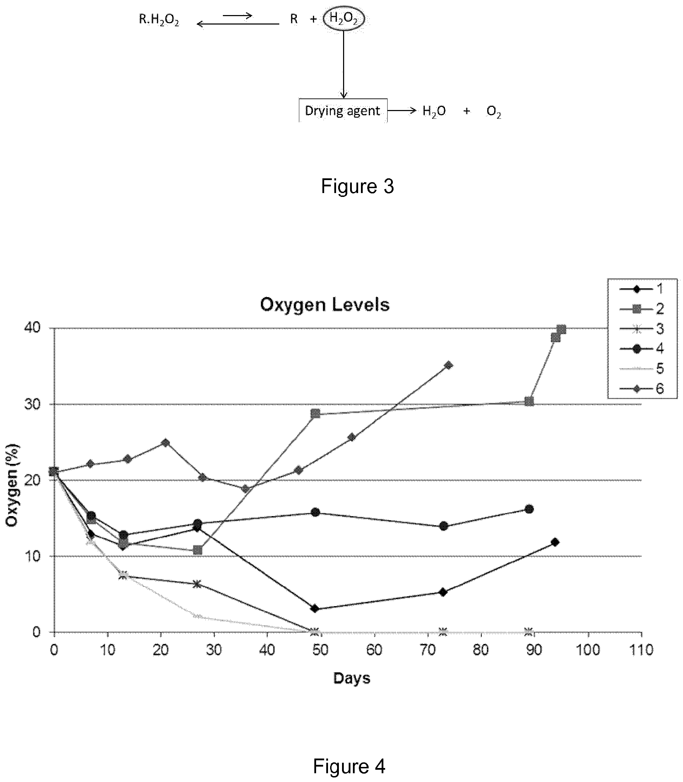

In a preferred embodiment, UHP is the only component contained within the wrapper. This is advantageous for two reasons. Firstly, inserts described in the prior art, such as those disclosed in GB2450860, often contain drying agents, such as zeolite or bentonite clay, which have a very large capacity to absorb water in the form of water vapour from the atmosphere. However, the present inventors have found, surprisingly, that the action of a drying agent is counterproductive in oxygen-releasing inserts because the presence of a drying agent accelerates decomposition of peroxide adducts. The best performing inserts have been found to be those that do not contain a drying agent. This is contrary to the teachings of the prior art and can be shown experimentally. It is believed that drying agents may not be specific enough to trap only water; they may also remove hydrogen peroxide from the system. As shown in Figure 3, this forces the equilibrium of disassociation adducts to the right hand side. Once the peroxide is free it will rapidly decompose to water and oxygen. Therefore, the presence of drying agents causes an increase in the oxygen level within a package, to above desirable levels. As such it is advantageous to eliminate drying agents from the insert of the invention.

The second advantage of having an oxygen-releasing insert consisting only of the wrapper and the UHP contained within the wrapper relates to the ease of manufacture. In the absence of a drying agent, only one chemical (UHP) is required, and this can conveniently be provided in the form of a UHP tablet, preferably a 1g UHP tablet. UHP tablet inserts are easier to handle in tablet form compared to dry powder. These tablets can be easily packaged, even into standard blister packs commonly used for tablets. Blister packing is most commonly defined by the two steps of: (1) thermo-forming a plastic tray with suitable cavities; and (2) adding the product and then heat-sealing a lid, often made of foil, over the top of the tray.

Advantages of using a blister pack format include: reproducible weight and volume fill, since the volume is defined by the dimensions of the blister; ease of arranging powder in the hollow of the blister until sealing resulting in fuller packages; and ease of preventing ingredients (e.g. powder) spilling onto the seal area, hence a better seal is obtained.

The wrapper helps to control the stability of the oxidant by restricting moisture availability, and hence slowing the release-rate of oxygen. The specific properties of the wrapper will depend to some extent on the nature of the packaged product. However, the wrapper should provide a good moisture barrier to protect the oxidant from water, but a relatively poor oxygen barrier to allow transmission of oxygen into the pack headspace. A wrapper is made from material having overall high oxygen transmission rates and low water vapour transmission rates. This may be achieved using a single material or a composite of two or more different materials.

The skilled person in the art will be aware that the oxygen transmission rate (OTR) of a material can be measured according to ASTM D3985 standard method. A high OTR is defined herein as 100 cm³/m²/24hr or higher and a low OTR is defined as being at or close to zero, for example in the range of 0.1-10.0 cm³/m²/24hr.

Similarly, the skilled person in the art will be aware that the water vapour transmission rate (WVTR) of a material can be measured according to ASTM F1249 standard method. A low WVTR is defined herein as 5.0 g/m²/24hr or lower. Both OTR and WVTR are determined at a pressure of 1 atm.

An example of a material that acts as a complete barrier to oxygen and water vapour (i.e. has a low OTR and low WVTR) is a foil, such as a polyethylene terephthalate/aluminium/ polyethylene (PET/alu/PE) trilaminate foil.

Examples of materials that permit overall high rates of oxygen transmission but low rates of water vapour transmission are breathable film, oriented polypropylene/poylethylene (OPP/PE) bilaminate plastic, nylon 11, high-density polyethylene (HDPE), polystyrene (PS), polypropylene (PP), polycarbonate (PC), low-density polyethylene (LDPE) and ethylene-vinyl acetate (EVA). Using a combination of the foil and the more permeable materials allows a balance of properties suitable for this application. A preferred wrapper is a composite of foil and OPP/PE bilaminate plastic.

The ideal gas transmission rate of an oxygen-releasing insert will vary according to the oxygen evolution/consumption rate of the packaged product. Preferably, the oxygen-releasing insert of the invention supplies oxygen to the internal environment within the package at a rate of 0.1-500 µL/g/day, more preferably at a rate of 1-250 µL/g/day, and most preferably at a rate of 2-105 µL/g/day. Oxygen is provided to the internal environment within the packaging continuously, in order to prevent oxygen depletion, and slowly, in order to suppress the rate of oxidative changes and the resultant negative effects on pH and sensory attributes of the product.

The rate of oxygen emission by the oxygen-releasing insert may vary according to the temperature and % moisture content within the package.

A second aspect of the invention provides a packaging system comprising a package, which may be sealed or re-sealable, containing a perishable product and an oxygen-releasing insert as described above.

A perishable packaged product is defined as any packaged product that is likely to lose its desirable characteristics or decay. For certain packaged products, including tobacco products and some food products, it is highly undesirable for the oxygen level within the package to fall to zero, however increasing the oxygen level significantly above zero is also damaging to the product, as the rate of oxidation, and associated oxidative damage to the product, increases with the percentage oxygen content. By maintaining a sub-atmospheric oxygen level undesirable oxidative processes are decelerated, yet by maintaining the oxygen level at greater than 0% alternate undesirable sensory effects, such as bad odour emission are prevented.

The ideal oxygen level with a package will vary depending upon the nature of the packaged products. The product may be a food product or a non-food product.

If the product is a tobacco product, it is preferable for the oxygen level within the package is actively maintained above zero and below 21% (atmospheric oxygen). Therefore, it is preferable for the oxygen level within the package to be actively maintained as close to zero as possible. Preferably, the oxygen level is maintained within a range of greater than 0% to 5%, more preferably within a range of greater than 0% to 2%, and most preferably at a level of 0.1%.

Alternatively, the perishable product contained within the packaging system may be any product having characteristics that can deteriorate over time as the result of oxidative processes, loss of flavour or moisture, pH fluctuations, changes in appearance and/or biochemical processes. Examples of such perishable products include fresh fruit and meat products. The ideal oxygen level with the package will vary depending upon the nature of the packaged product and may vary greatly from product to product, depending upon the oxygen demand of the product. Data for the oxygen demand of packaged produce is available in the literature¹⁻⁴.

Prevention of a zero-oxygen pack atmosphere by the oxygen-releasing insert of the invention prevents the deterioration of moisture, flavour and other sensory attributes of the product. This effect is enhanced by combining the insert of the invention with sealed or re-sealable packaging, however it is not essential that the packaging is sealable; foodstuff may be packaged in permeable packs and the oxygen-releasing insert of the invention used to boost oxygen levels in the local area of the foodstuff beyond that available from ingress through the packaging. The packaging system of the invention results in the product remaining fresher for longer, thereby maintaining the product quality and increasing the shelf-life.

In a preferred embodiment, the product is a tobacco product or tobacco material. The tobacco product or tobacco material may be selected from raw tobacco, processed tobacco, cigarettes, cigars, snus, "roll your own" (RYO) tobacco, and "make your own" (MYO) tobacco.

In a preferred embodiment, the tobacco product is snus. As used herein, the term "snus" refers to pasteurised moist powder tobacco product, that is usually consumed by placing under the upper lip.

The term "sealed package" refers to a gas-impermeable container having a hermetic closure. The term "re-sealable package" refers to a gas-impermeable container wherein the internal environment can be restored or re-stabilised following an opening or closure event. Sealed and re-sealable packages provide an absolute barrier enabling the moisture content and flavour of the product to be retained over time. The sealed or re-sealable package may, for example, be a retail package in which the product, such as a tobacco product, is sold to the end-user or a shipping container in which raw or processed tobacco products and/or materials, such as tobacco products and/or materials, are transported in bulk. Preferably, if the product is a tobacco product, the package is sealed or re-sealable.

The present invention will now be further described by the following nonlimiting example.

### Example

A variety of inserts were prepared for testing as detailed in Table 1 below.

**Table 1**

| Code | **Insert Wrapper** | | | | **Insert Contents** | |
|---|---|---|---|---|---|---|
| | | **OTR*** (cm³/m²/24h) | **WVTR*** (g^{/}m²/24h) | **Material** | **Oxidant** | **Drying agent** |
| 1 | Type A | 800 | 2 | 20 µm OPP / 80 µm PE | Urea hydrogen peroxide (1g) | None |
| 2 | Type A | 800 | 2 | 20 µm OPP / 80 µm PE | Urea hydrogen peroxide (1g) | Silica gel (1g) |
| 3 | Type B | 400 | 4 | 40 µm PE | Urea hydrogen peroxide (1g) | None |
| 4 | Type B | 400 | 4 | 40 µm PE µm | Urea hydrogen peroxide (1g) | Silica gel (1g) |

| | | | | | | |
|---|---|---|---|---|---|---|
| * OTR = oxygen transmission rate, according to ASTM D3985 standard; WVTR = water vapour transmission rate, according to ASTM F1249 standard; both measured at atmospheric pressure of 1 atm. | | | | | | |

For this experiment silica gel was chosen as the drying agent and was purchased in a format of 1-3 mm particle size with a colour indicator (red indicates material is active, yellow indicates inactive). However, numerous other drying agents are available, such as clays, calcium chloride and zeolites. The ingredients were mixed and put into the wrapper materials which were then closed by heat-sealing.

### Sample preparation & analysis

Metalised trilaminate material was used to make bags approximately 15 cm x 20 cm in size. 24 pouches of factory-produced snus was placed into each foil bag together with one oxygen-releasing insert of each type. Several samples of each variation were made, and the bags were heat-sealed to create an airtight closure. One set of samples (Sample Code 5) was made containing no inserts to act as a control. All the samples were stored at 22°C. Samples were periodically tested for gas composition using a PBI Dansensor gas analyser.

### Results & discussion

Oxygen analysis is shown in Figure 4. The coding reference is provided in Table 2.

**Table 2**

| Code | **Insert Wrapper** | | | | **Insert Contents** | |
|---|---|---|---|---|---|---|
| | | **OTR*** (cm³/m²/24h) | **WVTR*** (g/m²/24h) | **Material** | **Oxidant** | **Drying agent** |
| 1 | Type A | 800 | 2 | 20 µm OPP / 80 µm PE | Urea hydrogen peroxide (1g) | None |
| 2 | Type A | 800 | 2 | 20 µm OPP / 80 µm PE | Urea hydrogen peroxide (1g) | Silica gel (1g) |
| 3 | Type B | 400 | 4 | 40 µm PE | Urea hydrogen peroxide (1g) | None |
| 4 | Type B | 400 | 4 | 40 µm PE | Urea hydrogen peroxide (1g) | Silica gel (1g) |
| 5 | Control | No wrapper | | | None | None |
| 6 | Prior art | Third party material | | | Sodium percarbonate | Bentonite |

| | | | | | | |
|---|---|---|---|---|---|---|
| *OTR = oxygen transmission rate, according to ASTM D3985 standard; WVTR = water vapour transmission rate, according to ASTM F1249 standard; both measured at atmospheric pressure of 1 atm. | | | | | | |

Test samples 3 and 5 reached 0% oxygen after approximately 7 weeks. Test sample 2 gave off oxygen too rapidly and at a similar rate to the third party inserts (Sample Code 6). The inserts in these samples showed evidence of significant internal pressure. The remaining test samples 1 and 4 held the oxygen level within the target range of 0 - 20%. Sample 1 appeared to have held a steady 5-10% level of oxygen within the packs for several weeks, which is a significant improvement over the third party inserts.

There is a clear difference between the rate of oxygen release in the presence or absence of a drying agent. The best performing inserts did not contain a drying agent. The average oxygen levels in the packs containing drying agents for the final 3 weeks of the experiment was approximately 15%, whereas the average for the packs without a drying agent was approximately 5%.

### References:

1. "Postharvest technology of fruit and vegetables" Blackwell Science, 1996.
2. "Postharvest physiology and storage of tropical and subtropical fruits" CAB International, 1997.
3. Fonseca, SC et al. Journal of Food Engineering 52 (2002) 99-119.
4. "Respiratory Metabolism" from Mikal E. Saltveit; Mann Laboratory, Department of Vegetable Crops; University of California, Davis, CA.

## Claims

1. An oxygen-releasing insert for actively controlling the internal environment within a package to maintain a pre-determined gaseous composition, comprising urea hydrogen peroxide (UHP) contained within a sealed wrapper fabricated from a material or combination of materials providing oxygen and water vapour transmission capabilities to control the stability of the UHP by restricting moisture availability, wherein the sealed wrapper material or combination of materials provide an oxygen transmission rate of 100 cm³/m²/24hr or higher and a water vapour transmission rate of 5.0 g/m²/24hr or lower.

2. An oxygen-releasing insert according to claim 1, wherein the insert does not comprise a drying agent.

3. An oxygen-releasing insert according to any preceding claim, consisting of UHP contained within the wrapper.

4. An oxygen-releasing insert according to any preceding claim, wherein the UHP is in the form of a tablet.

5. An oxygen-releasing insert according to any preceding claim, wherein the insert emits oxygen at a rate of between 0.1-500 µl/g/day.

6. A packaging system containing a perishable product and an oxygen-releasing insert according to any preceding claim.

7. A packaging system according to claim 6, wherein the oxygen level within the package is maintained within a range of greater than 0% to 21%, preferably a range of greater to 0% to 5% and even more preferably a range of greater to 0% to 2%.

8. A packaging system according to claim 7, wherein the oxygen level within the package within the package is maintained at 0.1%.

9. A packaging system according to any of claims 6 to 8, wherein the package is a sealed or re-sealable package.

10. A packaging system according to any of claims 6 to 9, wherein the product is a food product or a tobacco product.

11. A packaging system according to any of claims 6 to 10, wherein the product is a snus oral tobacco product.

## Patentansprüche

1. Sauerstoff freisetzender Einsatz zum aktiven Steuern der inneren Umgebung innerhalb einer Verpackung, um eine vorbestimmte Gaszusammensetzung zu erhalten, umfassend Harnstoff-Wasserstoffperoxid (*urea hydrogen peroxide-* UHP), das innerhalb einer abgedichteten Hülle enthalten ist, die aus einem Material oder einer Kombination aus Materialien hergestellt ist, die Sauerstoff- und Wasserdampfübertragungsfähigkeiten bereitstellen, um die Stabilität des UHP durch Einschränken von Feuchtigkeitsverfügbarkeit zu steuern, wobei das Material oder die Kombination aus Materialien der abgedichteten Hülle eine Sauerstoffübertragungsrate von 100 cm³/m²/24h oder höher und eine Wasserdampfübertragungsrate von 5,0 g/m²/24h oder weniger bereitstellen.

2. Sauerstoff freisetzender Einsatz nach Anspruch 1, wobei der Einsatz kein Trockenmittel umfasst.

3. Sauerstoff freisetzender Einsatz nach einem der vorhergehenden Ansprüche, bestehend aus UHP, das innerhalb der Hülle enthalten ist.

4. Sauerstoff freisetzender Einsatz nach einem der vorhergehenden Ansprüche, wobei das UHP in der Form einer Tablette vorliegt.

5. Sauerstoff freisetzender Einsatz nach einem der vorhergehenden Ansprüche, wobei der Einsatz mit einer Rate zwischen 0,1-500 µl/g/Tag Sauersoff abgibt.

6. Verpackungssystem, das ein verderbliches Produkt und einen Sauerstoff freisetzenden Einsatz nach einem der vorhergehenden Ansprüche enthält.

7. Verpackungssystem nach Anspruch 6, wobei das Sauerstoffniveau innerhalb der Verpackung innerhalb eines Bereichs von mehr als 0 % bis 21 %, bevorzugt eines Bereichs von mehr als 0 % bis 5 % und sogar stärker bevorzugt eines Bereichs von mehr als 0 % bis 2 % erhalten wird.

8. Verpackungssystem nach Anspruch 7, wobei das Sauerstoffniveau innerhalb der Verpackung bei 0,1 % erhalten wird.

9. Verpackungssystem nach einem der Ansprüche 6 bis 8, wobei die Verpackung eine verdichtete oder eine wiederverschließbare Verpackung ist.

10. Verpackungssystem nach einem der Ansprüche 6 bis 9, wobei das Produkt ein Nahrungsmittelprodukt oder ein Tabakprodukt ist.

11. Verpackungssystem nach einem der Ansprüche 6 bis 10, wobei das Produkt ein Snus-Tabakprodukt für den oralen Gebrauch ist.

## Revendications

1. Insert dégageant de l'oxygène pour contrôler activement l'environnement interne à l'intérieur d'un emballage afin de maintenir une composition gazeuse prédéterminée, comprenant du peroxyde d'hydrogène urée (UHP) contenu dans un emballage scellé fabriqué à partir d'un matériau ou d'une combinaison de matériaux fournissant des capacités de transmission d'oxygène et de vapeur d'eau pour contrôler la stabilité du UHP en réduisant la disponibilité en humidité, où le matériau ou la combinaison de matériaux de l'emballage scellé fournit un débit de transmission d'oxygène de 100 cm³/m²/24 heures ou plus et un débit de transmission de vapeur d'eau de 5,0 g/m²/24 heures ou moins.

2. Insert dégageant de l'oxygène selon la revendication 1, dans lequel l'insert ne comprend pas d'agent de séchage.

3. Insert dégageant de l'oxygène selon l'une quelconque des revendications précédentes, constitué d'UHP contenu dans l'emballage.

4. Insert dégageant de l'oxygène selon l'une quelconque des revendications précédentes, dans lequel l'UHP est sous la forme d'un comprimé.

5. Insert dégageant de l'oxygène selon l'une quelconque des revendications précédentes, dans lequel l'insert émet de l'oxygène à un débit compris entre 0,1 et 500 µl/g/jour.

6. Système d'emballage contenant un produit périssable d'un insert dégageant de l'oxygène selon l'une quelconque des revendications précédentes.

7. Système d'emballage selon la revendication 6, dans lequel le niveau d'oxygène à l'intérieur de l'emballage est maintenu dans une plage supérieure à 0 % à 21 %, de préférence une plage supérieure à 0 % à 5 % et de manière encore plus préférée une plage supérieure à 0 % à 2 %.

8. Système d'emballage selon la revendication 7, dans lequel le niveau d'oxygène à l'intérieur de l'emballage à l'intérieur de l'emballage est maintenu à 0,1 %.

9. Système d'emballage selon l'une quelconque des revendications 6 à 8, dans lequel l'emballage est un emballage scellé ou refermable.

10. Système d'emballage selon l'une quelconque des revendications 6 à 9, dans lequel le produit est un produit alimentaire ou un produit du tabac.

11. Système d'emballage selon l'une quelconque des revendications 6 à 10, dans lequel le produit est un produit du tabac pour usage à priser.
